# EUROPEAN PATENT APPLICATION

(11) **EP 1 772 225 A1**
(43) Date of publication of application: **11.04.2007**
(21) Application number: 04771016.5
(22) Date of filing: 29.07.2004
(51) Int. Cl.: B23K 35/26

(54) **LEAD-FREE SOLDER ALLOY**

(71) Applicant: SENJU METAL INDUSTRY CO., LTD., Tokyo, 120-8555 (JP)
(72) Inventor: OHNISHI, Tsukasa, 3430026 (JP); YAMAKI, Tokuro, 3400023 (JP); AMAGAI, Masazumi, 3050051 (JP); WATANABE, Masako, 8700805 (JP)
(74) Representative: Schrimpf, Robert
(86) International application number: PCT/JP2004/010803
(87) International publication number: WO 2006/011204

(57) **Abstract**

[Problem]

Mobile electronic equipment is often dropped during use or transport, and the soldered joints of electronic parts sometimes peel off due to the impact when dropped. In addition, they undergo heat cycles in which internal coils, resistors, and the like generate heat and soldered joints increase in temperature during operation of electronic equipment and cool off during periods of non-use. With a conventional Sn-Ag base lead-free solder, the impact resistance and resistance to heat cycles of minute portions such as solder bumps were not adequate. The present invention provides a lead-free solder alloy, bumps of which have excellent impact resistance and resistance to heat cycles.

[Means for Solving the Problem]

The present invention is a lead-free solder alloy comprising 0.1 - less than 2.0 mass % of Ag, 0.01 - 0.1 mass % of Cu, 0.005 - 0.1 mass % of Zn, and a remainder of Sn, to which Ga, Ge, or P may be added, and to which Ni or Co may be further added.

## Description

### Technical Field

This invention relates to a solder alloy which does not contain lead, and particularly to a lead-free solder alloy which is suitable for forming minute soldered portions such as solder bumps.

### Background Art

In general, mounting of multi-functional parts such as BGA's (ball grid arrays) or CSP's (chip size packages) (referred to below as BGA's and the like) on a printed circuit board is carried out using solder bumps. Namely, at the time of mounting on a printed circuit board, solder bumps previously formed on the electrodes of a BGA or the like are made to contact the portions to be soldered of the printed circuit board, and then heating is performed in a heating apparatus such as a reflow furnace to melt the bumps. As a result, the solder bumps formed on the BGA or the like solder the electrodes of the BGA or the like to the printed circuit board and they are electrically connected to each other.

In the case of electronic parts such as QFP and SOIC in which a wafer is packaged, wire bonding is carried out using extremely fine gold wires to connect between the electrodes of the wafer and the electrodes of a workpiece on which the wafer is to be mounted. Present-day wire bonding techniques can perform connection at an extremely high speed, and connection of one location can now be performed in a short period of 0.1 seconds or less. However, no matter how rapidly wire bonding is carried out, since a gold wire must be connected to each electrode and an electronic part has a large number of electrodes, time is required to connect all the electrodes. Furthermore, gold wire is made of a precious metal, and not only is the material itself expensive, but many man hours are required to form extremely fine wires having a diameter of several tens of µm. Thus, costs are further increased. In addition, wire bonding is not possible with respect to a workpiece having a large number of electrodes at its center because the gold wires end up contacting each other.

Recently, the DCA (direct chip attachment) method in which electrical connection between a wafer and a workpiece is carried out by directly connecting the electrodes thereof without using gold wires has come to be employed. In the DCA method, solder bumps are previously formed on the electrodes of a wafer, and when the wafer is mounted on a workpiece, the solder bumps are made to contact the electrodes of the workpiece, and both parts are electrically connected to each other by melting the solder bumps. The DCA method can inexpensively perform manufacture without using gold wire. All the electrodes can be connected in a single operation, and it has excellent productivity. Accordingly, recently, connection of electrodes by the DCA method has come to make extensive use of connection by means of solder bumps. Connection using solder bumps can be performed by placing the electrodes of a workpiece and a member to be mounted thereon opposite each other and connecting them by the bumps, even when a large number of electrodes are disposed at the center of a workpiece. Contact of wires with each other such as occurs with wire bonding does not take place.

Methods using solder balls and solder paste are generally used as methods of forming solder bumps on BGA's and the like or wafers.

A conventional solder alloy for use in forming solder bumps was a Pb-Sn base solder alloy. Pb-Sn base solder alloys have been much used for solder balls and solder paste for forming solder bumps on the above-described BGA's and the like or wafers. Pb-Sn base solder alloys have excellent solderabilty. When soldering of a workpiece and a printed circuit board is performed using a Pb-Sn base solder alloy, highly reliable soldering with little occurrence of soldering defects is carried out.

When electronic equipment which was soldered using a Sn-Pb base solder alloy becomes obsolete or malfunctions, instead of being upgraded in performance or repaired, it is usually discarded. Of the materials constituting discarded electronic equipment, metal in frames, plastic in cases, glass in displays, and the like are recovered and reused, but printed circuit boards cannot be reused, and they have been disposed of by burial. This is because in a printed circuit board, resins and metal foil are bonded to each other, and metal foil is metallically joined to solder, so they cannot be separated from each other. If acid rain which seeps into the ground contacts printed circuit boards which have been disposed of by burial, Pb in the solder is dissolved out by the acid rain, and acid rain containing lead seeps further into the ground and enters into underground water. If humans or livestock drink underground water containing this lead over a long period, the lead accumulates in the body and may ultimately cause lead poisoning. Therefore, the use of lead has come to be restricted around the world, and so-called "lead-free solder" which does not contain Pb has come to be used.

Lead-free solder is solder having Sn as a main component to which Ag, Bi, Cu, Sb, In, Ni, Zn, or the like is suitably added.

From in the past, as lead-free solders, there have been binary alloys having Sn as a main component such as Sn-Cu, Sn-Sb, Sn-Bi, Sn-Zn, and Sn-Ag, and multiple-element lead free solders in which other elements are added to these binary alloys. In general, a lead-free solder alloy having Sn as a main component has inferior solderability compared to a conventional Pb-Sn solder, but binary and multiple-element Sn-Cu base and Sn-Sb base solders are even worse. With Sn-Bi base solders, the solder becomes brittle, so when an impact is applied to soldered joints, not only do they easily break, but lift-off may occur if a small amount of Pb is mixed in from the plating on leads. Since Zn is a base metal, when Sn-Zn base alloys are made into a solder paste, changes with the passage of time take place, and problems may occur such as it becoming impossible to perform application thereof by printing or of electrical corrosion occurring between soldered joints after soldering. As a lead-free solder having Sn as a primary component, a Sn-Ag base solder is superior to other binary lead-free solders with respect to solderability, brittleness, changes over time, and the like.

When the supply of current to electronic equipment is cut off to stop its use, the components thereof no longer generate heat, and the interior of a case returns to room temperature. Each time use and non-use of electronic equipment is carried out in this manner, a heat cycle occurs in which the interior of the case undergoes a repeated increase and decrease in temperature. This heat cycle causes thermal expansion and contraction of solder, electronic parts, and printed circuit boards. Printed circuit boards and electronic parts have different coefficients of thermal expansion, so when they are exposed to heat cycles, thermal stresses are produced in soldered joints. As a result, soldered joints undergo fatigue, and ultimately failure occurs. Therefore, solder used in electronic equipment must have resistance to heat cycles. The resistance to heat cycles of lead-free solders is not inferior to that of Pb-Sn solder alloys, and a Sn-Ag-Cu base solder alloy has excellent resistance to heat cycles (Japanese Published Unexamined Patent Application (Kokai) Hei 5-050286).

So-called mobile electronic equipment such as portable telephones, notebook computers, and digital cameras have come to demand excellent impact resistance of soldered joints connecting electronic parts within the electronic equipment. This is because mobile electronic equipment often receives impacts. When the electronic equipment peels off at soldered joints as a result of the impact, the electronic equipment can no longer perform its function. For example, a portable telephone which is placed into a shirt pocket may slip out and fall from the pocket when the user bends forward, and recent portable telephones which have an e-mail function may be dropped when being operated with one hand. In addition, when a notebook computer is carried in a briefcase, the entire briefcase is often dropped, and digital cameras are often dropped during use. Therefore, solder used in mobile electronic equipment has come to require excellent impact resistance. Lead-free solder alloys have a tendency to be weaker with respect to impacts from dropping compared to Pb-Sn base solder alloys. A lead-free solder which has good resistance to impacts from dropping is a lead-free solder characterized by comprising 0.5 - 5 mass % of Ag, 0.01 - 0.1 mass % of Cu, 0.001 - 0.05 mass % of P, and a remainder of Sn (Japanese Patent Application 2003-000788).

Inventions of Sn-Ag-Cu-Zn base lead-free solder alloys include one having low generation of dross and occurrence of bridging at the time of flow soldering (Japanese Published Unexamined Patent Application (Kokai) 2003-326386) and one having a large effect on suppressing electrode diffusion (Japanese Published Unexamined Patent Application (Kokai) 2002-185130).
- Patent Document 1:: Japanese Published Unexamined Patent Application (Kokai) Hei 5-050286
- Patent Document 2:: Japanese Patent Application 2003-000788
- Patent Document 3:: Japanese Published Unexamined Patent Application (Kokai) 2003-326386
- Patent Document 4:: Japanese Published Unexamined Patent Application (Kokai) 2002-185130

### Disclosure of the Invention

### Problem to be Solved by the Invention

Sn-Ag-Cu base lead-free solder alloys having excellent resistance to heat cycles could not be said to have sufficient impact resistance, particularly with respect to soldered joints having a small soldered area. Namely, recent electronic equipment has been increasing in performance and decreasing in size, and electronic parts incorporated therein are also becoming higher in performance and smaller in size. In spite of the fact that the number of electrodes of BGA's and the like is increasing, their overall size is decreasing. Solder bumps formed on the electrodes of electronic parts which are becoming smaller in this manner are also decreasing in size. If the solder in small soldered joints of lead-free solder has poor impact resistance, when an impact is imparted such as when the electronic equipment is dropped, the soldered joints can easily peel off, and the electronic equipment cannot perform its intended function.

In electronic equipment, when current is passed through a circuit during use, heat is generated by components, and the temperature of the interior of the case of the electronic equipment rises. If this condition of use continues, soldered joints are exposed to heat for long periods, and the solder or interfaces of joints undergo a change in metallurgical structure and deteriorate. In this case as well, the above-mentioned impact resistance decreases. Accordingly, impact resistance after exposure to thermal aging also becomes important. The lead-free solder of Patent Document 2 is a solder alloy having good resistance to impacts from dropping, but there is still a demand for a lead-free solder alloy which has greater impact resistance after exposure to thermal aging and which is not damaged even when electronic equipment having minute soldered joints is dropped and which has both adequate impact resistance and adequate resistance to heat cycles.

### Means for Solving the Problem

As a result of diligent research concerning improving the impact resistance and resistance to heat cycles of a lead-free solder containing Sn as a main component with respect to minute soldered joints, the present inventors found that by adding a minute amount of Zn to a lead-free solder alloy composition of Sn, Ag, and Cu, a lead-free solder alloy is obtained which has adequate impact resistance even after exposure to thermal aging and also has adequate resistance to heat cycles.

The present invention is a lead-free solder alloy characterized by comprising 0.1 - less than 2.0 mass % of Ag, 0.01 - 0.2 mass % of Cu, 0.005 - 0.1 mass % of Zn, and a remainder of Sn.

In a lead-free solder alloy according to the present invention, Ag has an effect on resistance to heat cycles. If the added amount thereof is less than 0.1 mass %, it has no effect on improving resistance to heat cycles, while if more than 2.0 mass % is added, impact resistance ends up decreasing.

In a lead-free solder alloy according to the present invention, Cu can increase impact resistance. If the added amount of Cu is less than 0.01 mass %, the effect of improving impact resistance is not obtained, while if it is contained in excess of 0.2 mass %, many voids end up being formed in soldered joints.

The addition of Zn has an effect on impact resistance after thermal aging. If the added amount is less than 0.005 mass %, it has no effect on improving impact resistance, while if it is added in excess of 0.1 mass %, the wettability of the solder alloy is markedly decreased, and the frequency of occurrence of voids increases.

In a Sn-Ag-Cu-Zn base lead-free solder alloy according to the present invention, at least one of Ga, Ge, and P can also be added in an amount of 0.0005 - 0.1 mass %. These elements have the effect of preventing yellowing of a lead-free solder. Yellowing can be ascertained by performing a high temperature exposure test on an electronic part such as a BGA using a lead-free solder. The conditions of a high temperature exposure test vary depending upon the maker of electronic parts or the maker of electronic equipment, but yellowing can be readily determined by exposure to a high temperature atmosphere at 125 EC for 200 hours. In a high temperature exposure test, if the surface of solder bumps becomes yellow, when solder bumps are inspected by image processing, accurate inspection cannot be performed, and the yellowing may be the cause of errors. Ga, Ge, and P have the effect of preventing yellowing. To prevent yellowing, it is necessary to add at least one of these in an amount of 0.0005 mass %. If more than 0.1 mass % of Ga, Ge, or P is added, solderability is worsened.

In a Sn-Ag-Cu-Zn base lead-free solder alloy according to the present invention, Ni or Co can be further added in an amount of 0.01 - 0.1 mass % to an Ag-Cu-Zn base lead-free solder to which at least one of Ga, Ge, and P has been added. These elements have an effect on the resistance to heat cycles of a lead-free solder. In the case of components such as BGA's having minute soldered joints, as a result of repeated use and non-use of electronic equipment, solder joints may fail when exposed to heat cycles occurs over a long period. In the present invention, by further adding a minute amount of at least one of Ni and Co to a Sn-Ag-Cu-Zn base lead-free solder or to a Sn-Ag-Cu-Zn base lead-free solder to which at least one of Ga, Ge, and P has been added, the effect is obtained of improving resistance to heat cycles. This effect is obtained if the total ofNi and Co is at least 0.01 mass %, but if more than 0.1 mass % is added, the melting point of the solder increases, and unmelted portions remain during soldering.

The present invention has the object of increasing impact resistance and improving resistance to heat cycles of minute soldered joints. An application for which this object is appropriate is solder bumps, but the effect of improving impact resistance and resistance to heat cycles can also be exhibited in ordinary soldering. It is common to use solder balls or solder paste to form solder bumps. Namely, with BGA's and the like, solder balls are mounted on the substrate of a BGA and the like, and solder bumps are formed by melting the solder balls, while with a wafer, a solder paste is applied atop the wafer, and solder bumps are formed by melting the solder paste.

### Effects of the Invention

A lead-free solder alloy according to the present invention is superior to conventional lead-free solder alloys with respect to impact resistance and resistance to heat cycles after bump formation. Namely, the solder alloy of the present invention has excellent reliability in that soldered joints do not readily peel off when electronic equipment is accidentally dropped during use or during transport, and in that even if use and non-use of electronic equipment are repeated over a long period, soldered joints do not peel off due to heat cycles. A lead-free solder alloy according to the present invention does not undergo yellowing even in a high temperature test following bump formation. Namely, errors do not occur during inspection of solder bumps by imaging, and excellent effects are also provided with respect to ability to undergo inspection.

### Best Mode for Carrying Out the Invention

Lead-free solder alloys according to the present invention having the compositions shown in Table 1 were prepared, and together with comparative examples of solder alloys, they were subjected to a dropping impact resistance test, a heat cycle resistance test, and a discoloration test. In addition, examples of the present invention and comparative examples of solder alloys having the compositions shown in Table 2 were prepared, and the occurrence of voids was compared.

### Example 1

Examples and comparative examples of lead-free solder alloys are shown in Table 1.

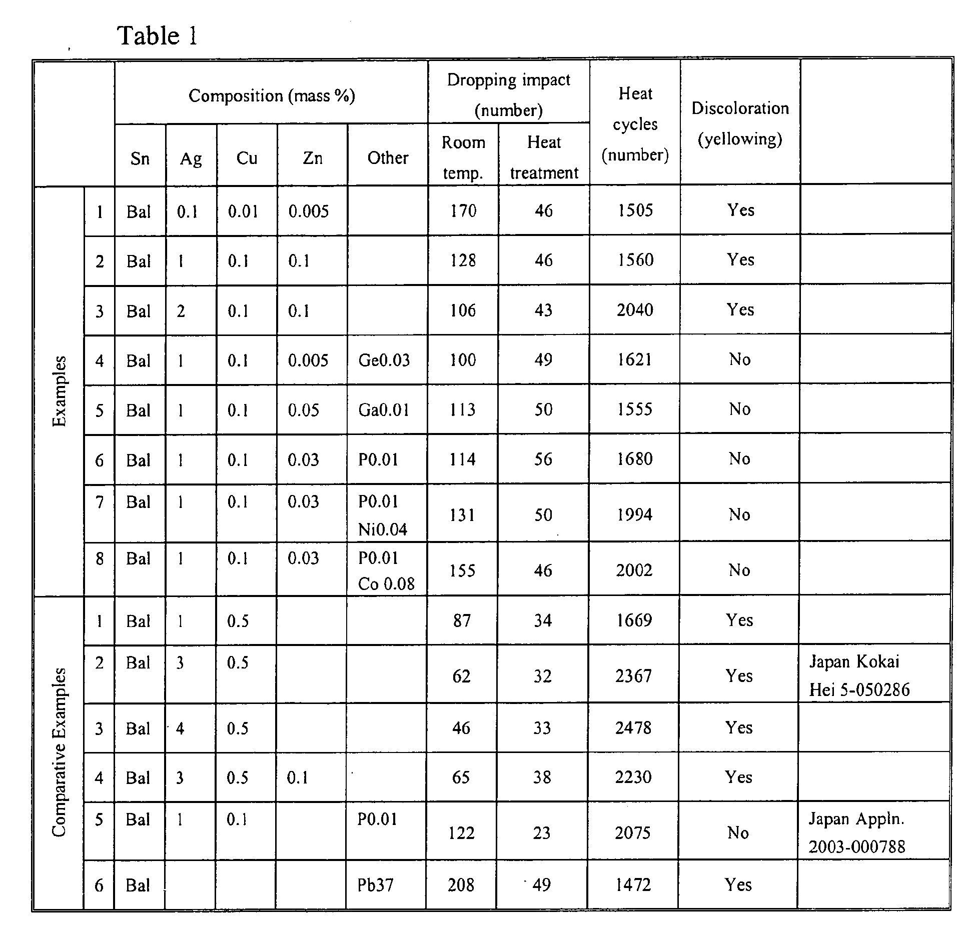

### Explanation of Table 1

Dropping impact resistance: An impact was applied between a CSP and a printed circuit board soldered by soldered bumps by dropping, and the number of times that dropping was performed until cracks formed in the soldered joints was measured. Measurement was performed after holding at room temperature after soldering and after 100 hours of heat treatment at 125EC.

### (Dropping impact test method)

1. A solder paste was applied by printing to a 10 x 10 mm CSP having 150 electrodes, and solder balls having a diameter of 0.3 mm were mounted thereon.
2. The CSP on which the solder balls were mounted was heated in a reflow furnace, and solder bumps were formed on the electrodes.
3. The CSP on which the solder bumps were formed was mounted at the center of a glass epoxy printed circuit board measuring 30 x 120 mm, heating was performed in a reflow furnace, and the CSP was soldered to the printed circuit board.
4. Both ends of the printed circuit board to which the CSP was soldered were secured atop an aluminum jig with a gap between it and the jig.
5. An impact was imparted to the printed circuit board by dropping the jig from a height of 500 mm. At this time, the center of the printed circuit board having both ends secured to the jig vibrated, and an impact was applied to the soldered joints connecting the printed circuit board and the CSP substrate by the vibration. Using this dropping test, the number of times that dropping was performed until cracks formed in the soldered joints of the CSP was measured. One hundred or more times in an initial state and forty or more times after heat treatment were evaluated as good.

Resistance to heat cycles: Heat cycles were applied to a printed circuit board on which electronic parts were mounted, and the number of cycles until failure of a soldered joint was measured.

### (Method of Testing Resistance to Heat Cycles)

1. Solder paste was applied by printing to a CSP measuring 10 x 10 mm and having 150 electrodes, and solder balls with a diameter of 0.3 mm were mounted thereon.
2. The CSP on which the solder balls were mounted was heated in a reflow furnace, and solder bumps were formed on the electrodes.
3. The CSP on which the solder bumps were formed was mounted on a glass epoxy printed circuit board measuring 120 x 140 mm, heating was performed in a reflow furnace, and the CSP was soldered to the printed circuit board.
4. The printed circuit board to which the CSP was soldered was placed into a heat cycle tester, it was subjected to heat cycles comprising exposure to -40E C for 10 minutes and +120E C for 10 minutes, and the number of cycles until the occurrence of failure of the soldered joints was measured. A value of 1500 cycles or higher was considered good.

Discoloration test (yellowing): Yellowing of the solder surface after high temperature heating was visually observed.

### (Yellowing test method)

1. Solder balls with a diameter of 0.3 mm were mounted on a CSP.
2. The solder balls mounted on the CSP were melted in a reflow furnace to form solder bumps.
3. The CSP having solder bumps formed thereon was left for 24 hours in a constant temperature bath at 150E C, after which the state of yellowing was visually observed. Samples for which there was almost no yellowing are indicated as No, and those for which there was prominent yellowing are indicated as Yes.

**Table 2**

| | | Composition (mass%) | | | | | Voids (number of bumps) | | Rate of voids |
|---|---|---|---|---|---|---|---|---|---|
| | | Sn | Ag | Cu | Zn | Other | Occurrence | Observed | (%) |
| | 1 | Bal | 0.1 | 0.01 | 0.01 | | 6 | 900 | 0.7 |
| | 2 | Bal | 1 | 0.1 | 0.03 | | 55 | 900 | 6.1 |
| Examples | 3 | Bal | 1 | 0.1 | 0.05 | | 178 | 900 | 19.8 |
| | 4 | Bal | 1 | 0.2 | 0.1 | | 252 | 900 | 28.0 |
| | 1 | Bal | 1 | 0.1 | 0.3 | | 450 | 450 | 100.0 |
| Comparative | 2 | Bal | 1 | 0.3 | 0.1 | | 450 | 450 | 100.0 |
| Examples | 3 | Bal | 3 | 0.5 | | | 101 | 1350 | 7.5 |
| | 4 | Bal | | | | Pb37 | 9 | 1350 | 0.7 |

### Explanation of Table 2

Voids in the solder bumps on the CSP were observed using an X-ray radiographic inspection apparatus, and the rate of occurrence was calculated.

(The method of calculating the number of voids which occurred was as follows.)
1. Solder balls with a diameter of 0.3 mm were mounted on a CSP.
2. The CSP on which the solder balls were mounted was heated in a reflow furnace to form solder bumps.
3. The CSP on which the solder bumps were formed was placed into an x-ray transmission apparatus, and the strength and contrast were set to permit voids in the bumps to be detected.
4. The number of bumps in which voids having a diameter of at least approximately 30 µm were formed was counted.
5. The number of bumps having voids was divided by the number of observed bumps to calculate the rate of occurrence of voids. A rate of void occurrence of 30% or less was evaluated as good.

A lead-free solder alloy according to the present invention is superior in that it has excellent impact resistance and resistance to heat cycles after exposure to thermal aging and in that it has little discoloration of solder or occurrence of voids.

### Industrial Applicability

A lead-free solder alloy according to the present invention can be applied to all manner of small electronic equipment capable of being dropped, including printed circuit boards for mobile equipment such as portable phones, notebook computers, and digital cameras, as well as remote controls and hand tools.

## Claims

1. A lead-free solder alloy **characterized by** comprising 0.1 - less than 2.0 mass % of Ag, 0.01 - 0.2 mass % of Cu, 0.005 - 0.1 mass % of Zn, and a remainder of Sn.

2. A lead-free solder alloy as set forth in claim 1 **characterized by** further comprising one or two or more of Ga, Ge, and P in an amount of 0.0005 - 0.1 mass %.

3. A lead-free solder alloy as set forth in claim 1 or 2 **characterized by** further comprising Ni or Co in a total amount of 0.01 - 0.1 mass %.
